# EUROPEAN PATENT SPECIFICATION

(11) **EP 3 421 680 B1**
(45) Date of publication and mention of the grant of the patent: **09.06.2021**
(21) Application number: 18179983.4
(22) Date of filing: 26.06.2018
(51) Int. Cl.: E04C 5/02, E04C 5/06, G06F 30/13, G06F 30/23, G06F 113/26

(54) **METHOD OF OPTIMIZING THE CONCRETE REINFORCEMENT ARRANGEMENT AND ORIENTATION IN CONCRETE**
VERFAHREN ZUR OPTIMIERUNG DER VERTEILUNG UND AUSRICHTUNG DER BETONBEWEHRUNG IM BETON
PROCEDE D'OPTIMISATION DE L'ARRANGEMENT ET DE L'ORIENTATION DES ARMATURES DANS LE BETON

(30) Priority: 27.06.2017 CZ 20170373
(43) Date of publication of application: 02.01.2019
(73) Proprietor: Ceské vysoké ucení technické v Praze, 160 00 Praha 6- Dejvice (CZ)
(72) Inventor: TEJ, Petr, 27706 Luzec nad Vltavou (CZ); KOLISKO, Jiri, 16000 Praha 6 (CZ)
(74) Representative: Kratochvil, Vaclav

(56) References cited:
- EP-A1- 1 091 325
- CN-A- 1 587 574
- CN-A- 105 696 619
- US-A1- 2013 151 204
- US-A1- 2016 314 227

## Description

### Background of the Invention

The present invention deals with a new method of reinforcing concrete building elements, for example bar-shaped ones, such as beams or columns, planar ones, such as various walls and slabs, as well as volumetric ones, such as foundation blocks. The new reinforcement method is based on the optimization of the directions and dimensions of the concrete reinforcement inserted into the formwork during production of the concrete building element.

### Description of Prior Art

Concrete is a material very resistant to pressure stress. Concrete element, in which tensile stress is formed when the load is imposed, needs to be reinforced by means of the concrete reinforcement, which distributes this tensile stress.

So far, concrete structures have been reinforced by a reinforcement consisting of bent steel rods, which are subsequently tied or welded together to form a volumetric reinforcement cage. The reinforcement cage is then inserted into the formwork and the concrete mixture is poured into it. The reinforcement cage is formed by bent bars with a constant cross-section. The shape variability of such reinforcement is limited by the technological procedures applied when forming it, which means that coverage of tensile stresses in such a case is always only approximate. The rods are most commonly connected by welding or by mechanical threaded couplings.

Document US 2013/151204 A1 discloses a method for optimizing the concrete reinforcement arrangement and orientation in concrete according to the preamble of claim 1.

### Summary of the Invention

Disadvantages mentioned above are removed by a method of optimizing the concrete reinforcement arrangement and orientation in concrete, which starts with calculating the load imposed on the building element to be manufactured with defined dimensions, and based on this known load, the distribution of tensile stress in this building element is determined. The principle of the new method is that the tensile stress distribution in the given building element is determined by creating a computer geometric model of this building element by means of a software, which uses mathematical finite element method, abbreviated as FEM. The volume of the geometric model of the building element is then split by a spatial mesh system into small discrete volumes from the group of shapes cube, cuboid, pyramid. The shape of a discrete volume is selected based on the shape of the building element. For regular volumes, cubes and cuboids are selected; pyramids are selected for irregular volumes. The size of these discrete volumes is selected based on the requested fineness of the resulting spatial reinforcement mesh. In the next step, a numeric method is used to determine the magnitudes of tensile stresses and spatial vectors of their directions at individual discrete nodes of the mesh, it means at vertices of the discrete volumes. Based on data obtained as described above, are designed both the directions of reinforcements in individual discrete nodes given by the resulting direction of the tensile stress, and also the diameters of individual reinforcement bars corresponding to the magnitudes of these tensile stresses. The resulting spatial reinforcement mesh is modeled by means of a CAD software and printed out using the Direct Metal Laser Sintering 3D metal printing method. Subsequently, the produced spatial reinforcement mesh is inserted into the formwork, concrete is poured in, and when it hardens, the final building element is demoulded.

The magnitudes of tensile stresses and spatial vectors of the tensile stresses directions in the individual discrete nodes are determined by the boundary element method, or the finite difference method.

The advantage of this optimized method of reinforcing the concrete building elements is that the reinforcement precisely follows the direction of the main tensile stress in the concrete element and it is optimized to distribute it. The spatial structure of the reinforcement may be produced in arbitrary shape arrangement. Spatial reinforcement mesh created as described may be designed in more economical shape structure required to manage the tensile stresses caused by the imposed load. It is possible to design and produce arbitrarily branched structure of the spatial reinforcement mesh, which eliminates the setbacks of the current reinforcements. The 3D printing technology allows to eliminate the need of welding or using mechanical couplings for connection of individual bars, the bars intersecting at different planes can intersect in a single plane regardless of the intersecting bars diameters.

### Explanation of Drawings

In order to present a comparison of the old and new methods of the concrete reinforcement implementation, Fig. 1 shows a side view of the present concrete reinforcement, and Fig. 2 shows an axonometric view of such reinforcement. Analogically, Fig. 3 shows a side view of the new concrete reinforcement implementation, and Fig. 4 shows an axonometric view of it.

### Detailed Description of the Preferred Embodiment

An example of the invention embodiment is the reinforcement of a bent beam loaded with the continuous distributed load.

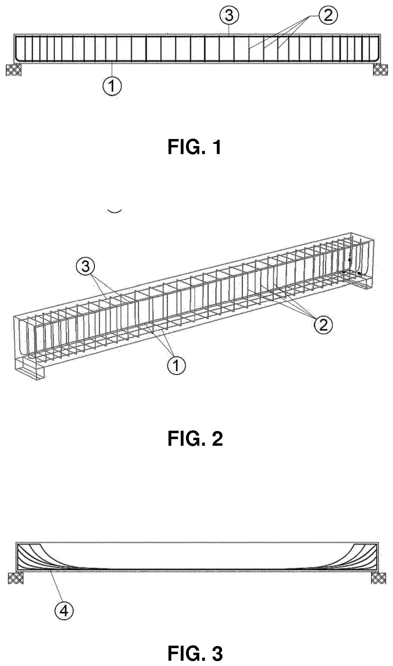

For comparison, the standard reinforcement method is shown first, which consists of several bars forming the longitudinal main supporting reinforcement 1 at the bottom edge of the beam, which serves to capture the main tensile stress imposed by the load. This main supporting reinforcement 1 is complemented with a system of tie bars 2 with the center-to-center distance varying in dependence on their position in the element, where the shortest it is close to the supports and the longest in the middle of the span. For structural reasons, a structural reinforcement 3 is added to the top edge of the beam in a minimum number of two pieces. A beam reinforced in a standard way is shown in Fig. 1 and Fig. 2. In case the beam is higher than industry standards allow, an additional longitudinal structural reinforcement is added in the half or one-third of its height, which is not shown in the drawings.

In a standard procedure implemented at present, the first step is to apply the known method to determine the load imposed on this building element, such as a beam, where its dimensions are defined. Based on the load, the distribution of tensile stress in the element is determined. Then, a traditional concrete reinforcement is designed, which has no complex shapes and is easy to manufacture. During manufacture, only the most stressed cross-section is considered and this is the base for designing the sectional area of steel. At all other cross-sections, the sectional area of steel is the same as in the most stressed cross-section, it means greater than necessary. Moreover, a lot of structural reinforcement is added in order to hold everything together. Separate parts of bars are welded or tied together, thus forming so-called reinforcement cage consisting of the main supporting reinforcement 1, tie bars 2 and structural reinforcement 3. Subsequently, such reinforcement cage is inserted into the formwork, the concrete mixture is poured in, and when the concrete hardens, the final building element is demoulded and installed in the structure.

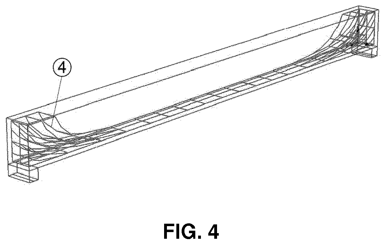

Reinforcing the beam with the optimized reinforcement designed according to the invention allows to take the advantage to branch and shape the reinforcement mesh arbitrarily. In order to transfer the tensile stress from the imposed load, the longitudinal bars will remain at the bottom edge, but they will be connected into a spatial mesh, which will provide for their individually designed spacing and will prevent the bars from "floating" in the beam's cross-section. In order to distribute the bond stresses, the longitudinal reinforcement will have more branches close to the supports and will follow the direction of the main tensile stress. An example of an element reinforced as described is shown in Fig. 3 and 4.

An example of the optimized reinforcement is shown in Fig. 3 and Fig. 4 showing the shape of the optimized spatial reinforcement mesh 4 manufactured using the 3D print technology.

The basis, again, was the dimensions of the building element, such as a beam, and the calculated load imposed on this building element. Based on the imposed load, the distribution of the tensile stress in the building element is determined, this is done by creating a computer geometric model of the given building element using the mathematical finite element method FEM. The volume of the geometric model is split by means of a spatial mesh into smaller discrete volumes, such as pyramids, cubes, cuboids. This mesh is created by a software during so-called meshing when the mesh shapes and dimensions are selected. This selection subsequently determines the fineness of final reinforcement. Next, the magnitudes of the tensile stresses are determined as well as the spatial vectors of directions of these tensile stresses in the element at the individual discrete nodes of the mesh, using the boundary element method, or the finite difference method. This step is followed by the design of diameters and directions of reinforcements in the individual discrete nodes of the element. The directions are given by the resulting direction of the tensile stress; diameters of the reinforcement bars, or sectional area of the reinforcement in general, are determined in relation to the tensile stresses according to the applicable standards, at present, for example, according to the standards EC 1992-1. Now, such designed spatial reinforcement mesh is modeled using computer CAD software in so-called 3D modelers. 3D print of the spatial reinforcement mesh 4 of metal is done by the DMLS method - Direct Metal Laser Sintering. This spatial reinforcement mesh 4 is inserted into the formwork, the concrete mixture is poured over it, and when the concrete hardens, the final building element is demoulded and installed in the given structure.

Current computational processes and manufacturing technologies make it possible to design and create a precise spatial reinforcement mesh in a loaded concrete element optimized to distribute tensile stresses. The new reinforcement method is supported by the finite element computation method FEM, which allows to display the tensile stresses magnitudes and directions with precision in the computer model of the stressed element. For such determined tensile stress the reinforcement is designed, which accurately follows the direction of the main tensile stress. Individual directions of the reinforcements are subsequently connected in a spatial reinforcement mesh. The 3D print is a potential technology to be used for this reinforcement method. The spatial structure of the metal reinforcement printed out by the 3D printers can be manufactured with arbitrary shape arrangement. Spatial reinforcement created as described may be manufactured in the shape optimized with respect to the weight of the reinforcement, which is required to distribute the tensile stresses caused by the imposed load. It is possible to print out an arbitrarily branched structure and spatial meshes that eliminate the setbacks of the current reinforcement method. Also, the new method eliminates the need of welding or using mechanical couplings for connection of individual bars, the bars intersecting at different planes can intersect in a single plane regardless of the intersecting bars diameters.

### Industrial Applicability

The invention can advantageously be used in the industrial production of all precast elements in plants producing precast concrete products. 3D printing of the reinforcement mesh and subsequent monolithic fixing it with any concrete mix allows to produce all types of precast building elements, such as panels, beams, lintels, columns, etc.

## Claims

1. Method for optimizing the concrete reinforcement arrangement and orientation in concrete wherein first, the load imposed on a building element to be produced with given dimensions is calculated, and based on the calculated load the tensile stress distribution in this building element is determined, then, based on the tensile stress distribution in the given building element a geometric model of this building element is created and the volume of the geometric model of the building element is split using a spatial mesh system into discrete volumes from the group of shapes cube, cuboid, pyramid, wherein the shape of the discrete volumes is selected based on the shape of the building element, and their size is selected based on the requested fineness of the resulting spatial reinforcement mesh (4), then a numeric method is used to determine both the magnitudes of the tensile stresses, and also the spatial vectors of directions of the tensile stresses at individual discrete nodes of the mesh, and based on such obtained data are designed both the directions of reinforcements at individual discrete nodes of the mesh given by the resulting direction of the tensile stress, and also the diameters of individual reinforcement bars corresponding to the magnitudes of these tensile stresses **characterized by the fact that** the magnitudes of the tensile stresses and the spatial vectors of their directions at the individual discrete nodes of the mesh are determined using the boundary element method or the finite difference method and then the spatial reinforcement mesh (4) is modeled and printed by the Direct Metal Laser Sintering method.

## Patentansprüche

1. Verfahren zur Optimierung der Verteilung und Ausrichtung der Betonbewehrung in Beton, bei der zunächst die Belastung des hergestellten Bauelements mit gegebenen Abmessungen berechnet wird und auf der Grundlage dieser Berechnung wird die Verteilung der Zugspannung in diesem Bauelement festgelegt, dann werden nach der Verteilung der Zugspannung im gegebenen Bauelement auf der Grundlage der Erstellung eines geometrischen Models dieses Bauelements, wobei das Volumen des geometrischen Models des Bauelements durch ein räumliches Netz in diskrete Volumen der Form aus der Gruppe Quadrat, Quader, Pyramide geteilt, wobei die Form des diskreten Volumens in Abhängigkeit von der Form des Bauelements und die Größe in Abhängigkeit von der erforderlichen Feinheit des resultierenden räumlichen Bewährungsnetzes (4) gewählt wird, durch nummerisches Verfahren die Größen der Zugspannungen und räumliche Richtungsvektoren der Zugspannungen in einzelnen diskreten Knoten des Netzes bestimmt und von so erhaltenen Daten die Richtungen der Bewährungen in einzelnen diskreten Knoten des Netzes entworfen, gegeben durch die resultierende Richtung der Zugspannung, sowie die Durchmesser einzelner Bewährungsstäbe entsprechend den Größen dieser Zugspannungen **gekennzeichnet dadurch, dass** die Größen der Zugspannungen und die räumlichen Vektoren deren Richtungen in einzelnen diskreten Knoten des Netzes durch das Verfahren der Grenzelemente oder das Verfahren der Enddifferenzen bestimmt werden und dann wird das Bewährungsnetz (4) modelliert und mit Verfahren Direct Metal Laser Sintering gedruckt.

## Revendications

1. Une méthode d'optimisation pour disposer et orienter des armatures de béton dans le béton, où l'on calcule d'abord la charge sur un élément de construction fabriqué dont les dimensions sont définies et sur la base de la charge calculée on peut déterminer la répartition des contraintes de traction dans cet élément de construction, ensuite, en fonction de la répartition des contraintes de traction dans l'élément de construction donné, sur la base d'un modèle géométrique informatique de cet élément de construction où le volume du modèle géométrique de l'élément de construction est divisé, au moyen d'un réseau spatial, en volumes discrets de formes appartenant au groupe du cube, parallélépipède, pyramide et où la forme du volume discret est sélectionnée en fonction de la forme de l'élément de construction et sa taille est sélectionnée en fonction de la densité du réseau (4) spatial renforcé résultant, sont déterminés, d'une part les grandeurs des contraintes de traction et les vecteurs spatiaux des orientations des contraintes de traction dans les différents noeuds discrets du réseau en utilisant une méthode numérique, et, à partir des données ainsi obtenues, les orientations des armatures dans les différents nœuds discrets du réseau données par l'orientation résultant de la contrainte de traction d'une part, et les diamètres des différentes barres de l'armature correspondant aux grandeurs de ces contraintes de traction d'autre part, sont proposés, **caractérisés en ce que** les grandeurs des contraintes de traction et les vecteurs spatiaux de leurs orientations dans les différents nœuds discrets du réseau sont déterminés par la méthode des éléments frontières ou par la méthode des différences finies, puis le réseau (4) d'armature spatial est modélisé et imprimé par la méthode Direct Metal Laser Sintering.
